# EUROPEAN PATENT APPLICATION

(11) **EP 2 977 600 A1**
(43) Date of publication of application: **27.01.2016**
(21) Application number: 15176507.0
(22) Date of filing: 13.07.2015
(51) Int. Cl.: F02K 1/82, F02C 7/24

(54) **ACOUSTIC LINER HEAT EXCHANGER**

(30) Priority: 21.07.2014 US 201462027135 P
(71) Applicant: United Technologies Corporation, Hartford, CT 06101 (US)
(72) Inventor: LORD, Wesley K., South Glastonbury, CT Connecticut 06073 (US); SUCIU, Gabriel L., South Glastonbury, CT Connecticut 06033 (US)
(74) Representative: Hull, James Edward

(57) **Abstract**

An acoustic liner (3) for a gas turbine engine (10) includes an acoustic structure (35) for the absorption of acoustic excitation and a heat exchanger. The heat exchanger is able to exchange heat across the acoustic structure (35).

## Description

### FIELD OF THE DISCLOSURE

The subject matter of the present disclosure relates generally to gas turbine engines and, more particularly, to acoustic liners and heat exchangers for gas turbine engines.

### BACKGROUND OF THE DISCLOSURE

Many modern aircraft employ gas turbine engines for propulsion. Such engines include a fan, compressor, combustor and turbine provided in serial fashion, forming an engine core, and arranged along a central longitudinal axis. Air enters the engine through the fan and is pressurized in the compressor. This pressurized air is mixed with fuel in the combustor. The fuel-air mixture is then ignited, generating hot combustion gases that flow downstream to the turbine. The turbine is driven by the exhaust gases and mechanically powers the compressor and fan via an internal shaft. Energy from the combustion gases not used by the turbine is discharged through an exhaust nozzle, producing thrust to power the aircraft.

Turbofan engines contain an engine core and fan surrounded by a fan cowl, forming part of the nacelle. The nacelle is a housing that contains the engine. The fan is positioned forward of the engine core and within the fan cowl. The engine core is surrounded by an engine core cowl and the area between the fan cowl and the engine core cowl is functionally defined as the fan duct. This fan duct is substantially annular in shape to accommodate the airflow from the fan and around the engine core cowl. The airflow through the fan duct, known as bypass air, travels the length of the fan duct and exits at the aft end of the fan duct at a fan nozzle. The fan nozzle is comprised of an engine core cowl disposed within a fan cowl and is located at the aft portion of the fan duct.

In addition to thrust generated by combustion gasses, the fan of turbofan jet turbine engines also produces thrust by accelerating and discharging ambient air through the fan exhaust nozzle. Various parts of the engine generate heat while operating, including the compressor, combustor, turbine, central rotating shaft and fan. To maintain proper operational temperatures, excess heat must be removed from the system. Conventionally, this is accomplished using oil coolant loops including air/oil or fuel/oil heat exchangers. The excess heat is dumped into the bypass airflow for removal from the system.

Components of gas turbine engines also produce acoustic excitations when operating, particularly the fan as it rotates at a given angular speed. These acoustic excitations can be absorbed into sections of the gas turbine engine or expelled through the fan nozzle at the aft end of the nacelle. Absorbing these acoustic excitations is a critical design consideration, as they may cause excessive external noise or vibrations in engine components not designed to absorb them. A conventional acoustic liner is often used to absorb a portion of these acoustic excitations and can be located at various points along the fan duct.

Separate cooling and acoustic systems are generally used. However, combining these into a single acoustic liner could improve system efficiency, cost and complexity by reducing the total number of engine components.

Accordingly, there is a need for an improved acoustic liner heat exchanger.

### SUMMARY OF THE DISCLOSURE

To meet the needs described above and others, the present disclosure provides an acoustic liner for a gas turbine engine, the acoustic liner may include an acoustic structure for the absorption of acoustic excitation. The acoustic liner may also include a heat exchanger operatively associated with the acoustic structure. The heat exchanger may be able to exchange heat across the acoustic structure.

The acoustic structure may include cells arranged perpendicular to, and between, a perforated plate and a back plate.

The cells may be honeycomb shaped in cross-section.

The cells, perforated plate or back plate may be fabricated using an additive manufacturing method.

The heat exchanger may include one or more channels for a coolant.

The channels may be in coolant flow communication with a coolant loop in the gas turbine engine.

The coolant may be air.

The coolant in the channels may flow in a direction counter to the direction of airflow through a fan duct adjacent to the acoustic liner.

The acoustic liner may be located on an inner diameter surface of a fan duct.

The present disclosure also provides a gas turbine engine that may include a fan, a compressor downstream of the fan, a combustor downstream of the compressor, a turbine downstream of the compressor, an acoustic structure for the absorption of acoustic excitation and a heat exchanger operatively associated with the acoustic structure. The heat exchanger may be able to exchange heat across the acoustic structure.

The acoustic structure may include cells arranged perpendicular to, and between, a perforated plate and a back plate.

The cells may be honeycomb shaped in cross-section.

The cells, perforated plate or back plate may be fabricated using an additive manufacturing method.

The heat exchanger may include one or more channels for a coolant.

The channels may be in coolant flow communication with a coolant loop in the gas turbine engine.

The coolant may be air.

The coolant in the channels may flow in a direction counter to the direction of airflow through a fan duct adjacent to the acoustic liner.

The acoustic liner may be located on an inner diameter surface of a fan duct.

The acoustic liner may be sized and arranged to correspond to the wavelength of acoustic excitation produced by the fan.

The present disclosure further provides a method of absorbing acoustic excitation in a gas turbine engine, that may include providing an acoustic liner for the absorption of acoustic excitation, the acoustic liner may include cells arranged perpendicular to, and between, a perforated face plate and a back plate, operatively associating a heat exchanger with the acoustic liner, the heat exchanger may be able to exchange heat across the acoustic liner, the heat exchanger may include one or more channels for a coolant, and positioning the acoustic liner adjacent to a fan duct.

### BRIEF DESCRIPTION OF THE DRAWINGS

For further understanding of the disclosed concepts and embodiments, reference may be made to the following detailed description, read in connection with the drawings, wherein like elements are numbered alike, and in which:
FIG. 1 is a sectional view of a gas turbine engine.
FIG. 2 is a schematic side view of a gas turbine engine.
FIG. 3 is a schematic side view of a gas turbine engine with portions of a nacelle sectioned and broken away to show details of the present disclosure
FIG. 4 is an exploded perspective view of the acoustic liner showing an embodiment of the present disclosure.
FIG. 5 is an end view of the acoustic liner showing an embodiment of the present disclosure.
FIG. 6 is a flowchart depicting a sample sequence of steps which may be practiced using the teachings of the present disclosure.

It is to be noted that the appended drawings illustrate only typical embodiments and are therefore not to be considered limiting with respect to the scope of the disclosure or claims. Rather, the concepts of the present disclosure may apply within other equally effective embodiments. Moreover, the drawings are not necessarily to scale, emphasis generally being placed upon illustrating the principles of certain embodiments.

### DETAILED DESCRIPTION OF THE DRAWINGS

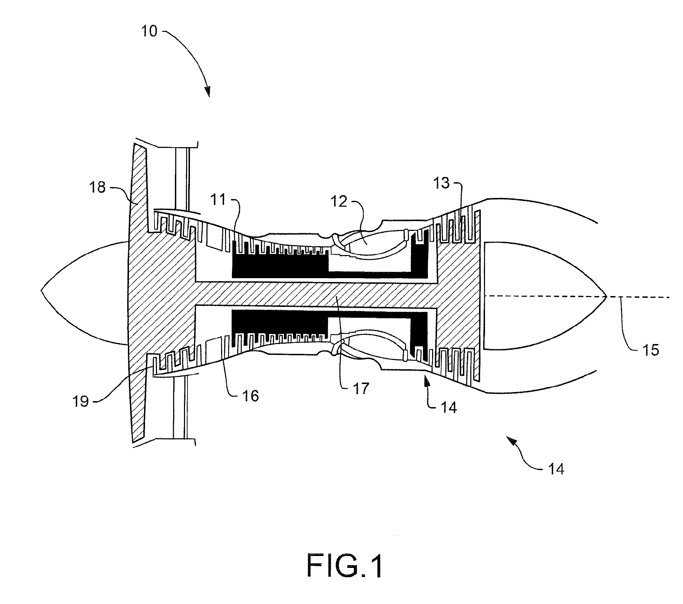

Turning now to the drawings, and with specific reference to FIG. 1, a gas turbine engine constructed in accordance with the present disclosure is generally referenced to by reference numeral 10. The gas turbine engine 10 includes a compressor 11, combustor 12 and turbine 13, known as the engine core 14, lying along a central longitudinal axis 15, and surrounded by an engine core cowl 16. The compressor 11 is connected to the turbine 13 via a central rotating shaft 17. Additionally, in a typical multi-spool design, plural turbine 13 sections are connected to, and drive, corresponding plural compressor 11 sections and a fan 18, enabling increased compression efficiency.

As is well known in the art, ambient air passes through the fan 18 and enters the compressor 11 at an inlet 19, is pressurized, and is then directed to the combustor 12, mixed with fuel and combusted. This generates combustion gases that flow downstream to the turbine 13, which extracts kinetic energy from the exhausted combustion gases. The turbine 13, via the central rotating shaft 17, rotatingly drives the compressor 11 and the fan 18, which draws in ambient air.

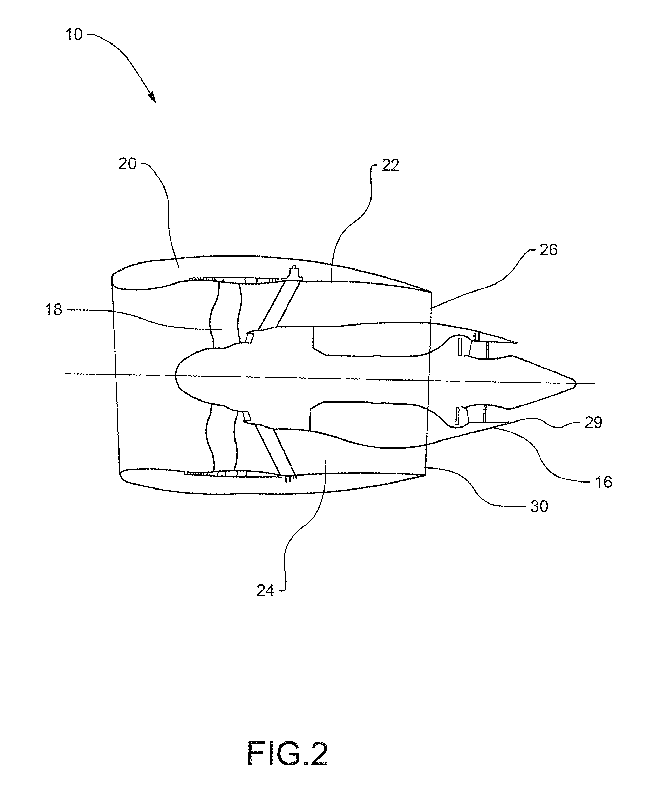

A nacelle 20 is a substantially cylindrical housing around the gas turbine engine 10. As best understood through FIG. 2, the interior surface of nacelle 20 consists of a fan cowl 22, which surrounds the fan 18 and engine core cowl 16. A fan duct 24 is functionally defined by the axially extending area between the engine core cowl 16 and the fan cowl 22. The fan duct 24 is substantially annular in shape to accommodate the airflow produced by the fan 18. This airflow travels the length of the fan duct 24 and exits downstream at a fan nozzle 26. Thrust is produced both by the ambient air accelerated aft by the fan 18 through the fan duct 24, and by exhaust gasses exiting from the engine core 14. The fan nozzle 26 is located at the downstream exit of the fan duct 24. The fan nozzle 26 shape is defined by the axially extending area between the engine core cowl trailing rim 29 and the nacelle trailing rim 30.

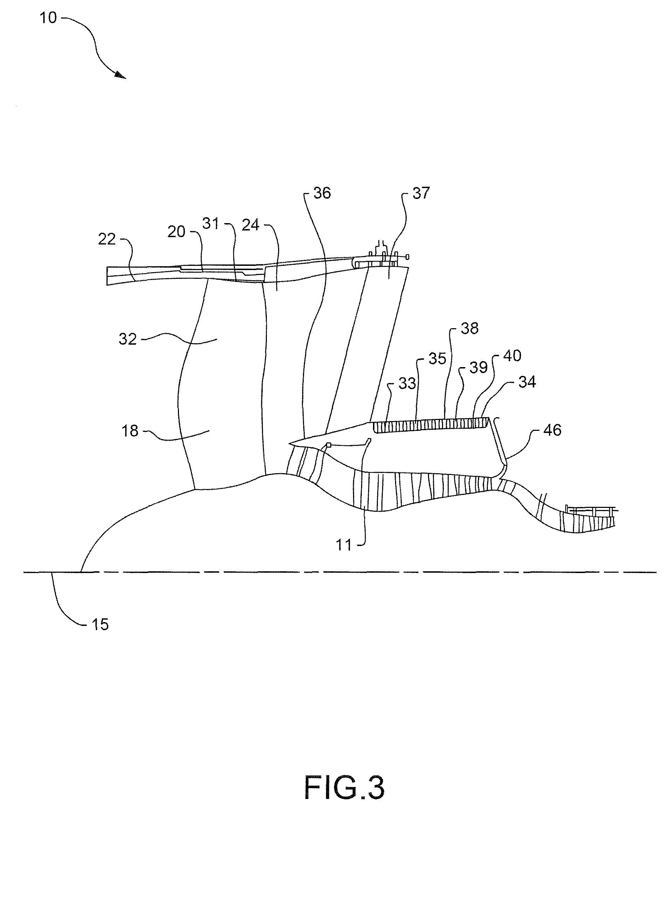

The fan 18 may include a plurality of blades 32 radially extending from the central longitudinal axis 15, as best shown in FIG. 3. Blades 32 are disposed within the nacelle 20 and rotate relative thereto in close proximity. More specifically, each blade 32 rotates against a rub strip 31 lining the fan cowl 22.

An acoustic liner 33 according to the present disclosure may be located on a surface 34 of the fan duct inner diameter 36. The acoustic liner 33 may also be located at other points in the fan duct 24, including on the fan cowl 22 or on a vane 37.

As the fan 18 rotates within the nacelle 20, acoustic excitations are created. These acoustic excitations can be absorbed into sections of the gas turbine engine 10 or expelled through the fan nozzle 26 at the aft end of the nacelle 20. Absorbing these acoustic excitations is something to consider in engine design, as they may cause excessive external noise or vibrations in engine components not designed to absorb them. In light of this, the present disclosure greatly improves upon the prior art in this regard, as will now be explained.

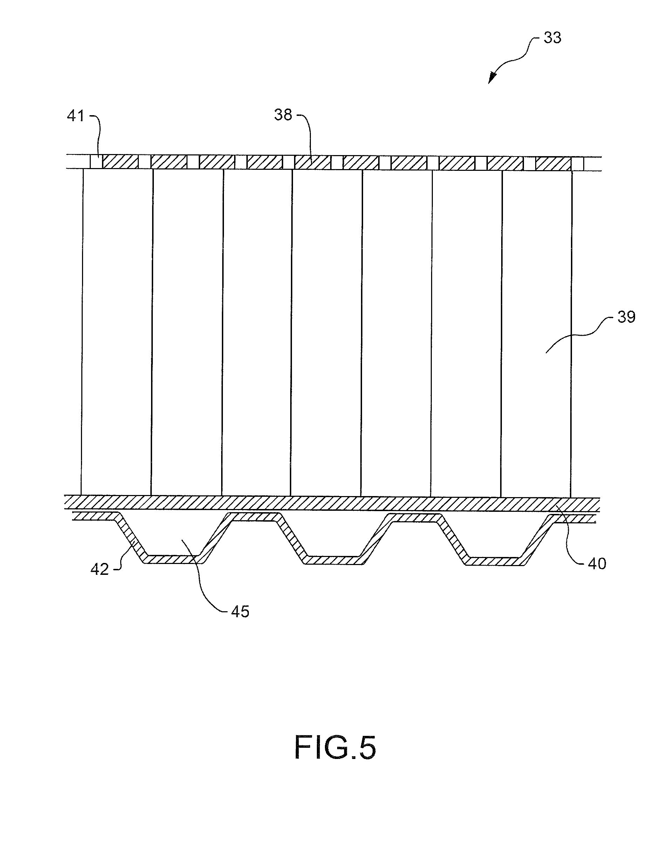

More specifically, the acoustic liner 33 according to the present disclosure teaches an acoustic structure 35 that may include a perforated plate 38, cells 39, and a back plate 40, as shown in FIGS. 3-5. The perforated plate 38 may be positioned along the fan duct inner diameter 36 and may include one or more perforations 41. The perforations 41 may correspond to the cells 39. A cell 39 may open to the fan duct 24 via one or more perforations 41. Alternatively, one perforation 41 may provide an opening between the fan duct 24 and one or more cells 39.

The cells 39 may be located between the perforated plate 38 and the back plate 40. Cells 39 may have various cross-sectional shapes, including honeycombs, squares, circles or other geometric shapes. Cells 39 may also be formed from a folded cavity and incorporate an 'L' shape. The cells 39 may be arranged perpendicular to, and between, the perforated plate 38 and the back plate 40. Cell 39 width may be between 5-10mm (.19-.4 inches) and the distance between the perforated plate 38 and the back plate 40 may be between 25-50mm (.98-1.97 inches), although these are only examples and other dimensions are certainly possible and within the scope of this disclosure. The perforated plate 38 may be located adjacent to the fan duct 24, and may form a part of the fan duct 24. As will be described below, this locational arrangement may enable heat energy produced by the gas turbine engine 10 to pass through the acoustic structure 35 and enter the fan duct 24 for removal from the system.

The effective surface area of the acoustic structure 35 may be many times greater than the face area at the fan duct inner diameter 36, due primarily to the cell 39 sidewalls. For example, in one embodiment, the effective surface area of the acoustic structure 35 may be up to thirty times greater than the face area of the fan duct inner diameter 36. Further, the cell 39 wall thickness may be greater than the corresponding wall thickness of a conventional acoustic liner. This difference better allows the cells 39 to act as heat sinks and draw heat from the back plate 40. The acoustic liner 33 of the present disclosure may have a cell 39 wall thickness between, for example, 0.1-0.25mm (.0039-.01 inches), while a conventional acoustic liner may have a cell wall thickness of under 0.125mm (.005 inches).

Fan 18 operation at a given rotational speed produces acoustic excitations at a wavelength and frequency. The acoustic structure 35 may be designed with a thickness between the perforated plate 38 and the back plate 40 corresponding to the wavelength of acoustic excitations produced by the fan 18, optimizing acoustic absorption by the acoustic structure 35.

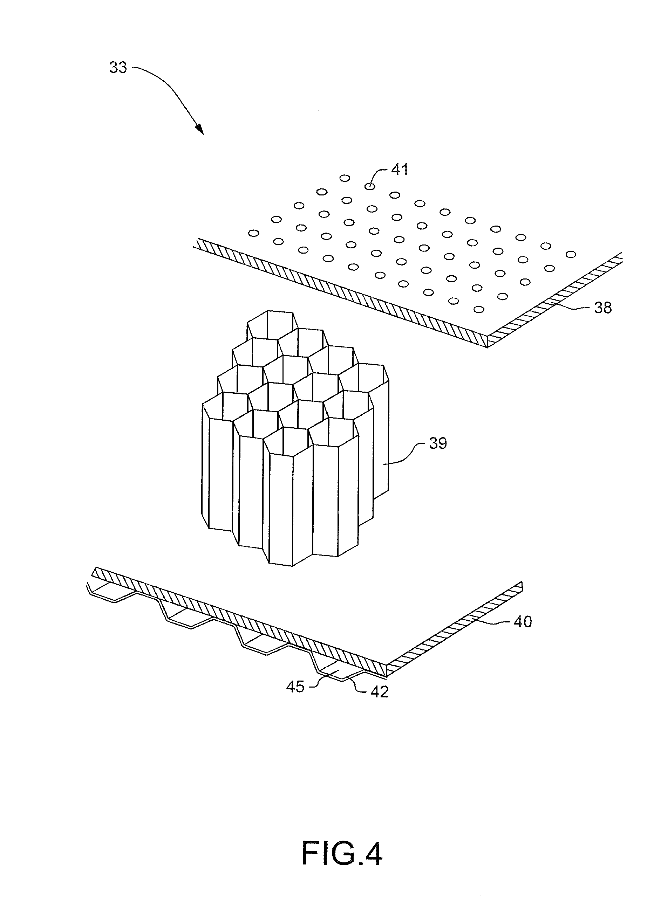

The back plate 40 may include one or more channels 42 for a coolant 45, as shown in FIGS. 4-5. The coolant 45 may be a fluid or a gas, such as oil or air. As the gas turbine engine 10 operates, ambient air is compressed and combusted within the engine core 14. These processes generate heat which must be removed from the system for proper operation. Accordingly, one or more coolant loops 46 may be located in or near the gas turbine engine 10 or engine core 14. The channels 42 may be in flow communication with such a coolant loop 46 running through or near various areas of the gas turbine engine 10, including the compressor 11, combustor 12, turbine 13, central rotating shaft 17, fan 18, nacelle 20 or other electrical or mechanical component.

In addition to vibration damping, the acoustic liner 33 may facilitate the removal of heat from the gas turbine engine 10 as well. Heat energy produced by the gas turbine engine 10 may be absorbed by the coolant loop 46 and flow to the channels 42 in the back plate 40. The heat may then transfer, via conduction, convection or radiation, to the cells 39. As the cells 39 absorb this heat energy, bypass air accelerated by the fan 18 through the fan duct 24 may subsequently receive the 'dumped' heat energy from the cells 39 via convection or radiation. Further, as the fan 18 rotates within the nacelle 20, a sequence of acoustic pressure pulses is created as each blade 32 strikes a given section of air. These pulses may serve to aid the heat exchange between the cells 39 and the bypass air within the fan duct 24. As each pulse relatively raises the air pressure within the fan duct 24, bypass air may be pushed into each cell 39 through the perforated plate 38. As a pulse passes, a relatively lower fan duct 24 air pressure draws air from each cell 39 through the perforated plate 38 towards the fan duct. Through this process, the cells 39 are exposed to a greater quantity of bypass air and can more efficiently 'dump' heat into the fan duct for expulsion through the fan nozzle 26.

The coolant 45 could also interact with the coolant loop 46 through one or more intermediate coolant loops. Alternatively, the channels 42 could use air drawn from various parts of the gas turbine engine 10, including the compressor 11, combustor 12, turbine 13, central rotating shaft 17, fan 18, nacelle 20 or other electrical or mechanical component. This heated air could then be used as a coolant 45 to discharge heat into the fan duct 24. The channels 42 could also induce a phase-change in the coolant 45, enabling a more efficient heat transfer into the fan duct 24.

Regardless of the coolant 45 used, the channels 42 may flow in a direction counter to the direction of airflow through the fan duct 24. This counter-flow may enable a more efficient heat exchange between the coolant 45 and the airflow through the fan duct 24.

The acoustic structure 35 may also be in direct contact with, and draw heat from, an engine component, such as the compressor 11 or the combustor 12. Such an arrangement could allow heat transfer between the component and the acoustic structure 35 without the complexity, weight and cost of a channel 42 and coolant 45 system.

Cells 39, perforated plate 38 or back plate 40 may be manufactured using an additive construction process for a more efficient or precise fabrication. The acoustic liner 33 may not involve adhesives or polymers in its construction. Instead, metals, alloys or carbon-based materials with higher thermal conductivity properties may be used.

It should be noted that the concepts of the present disclosure are equally applicable to geared turbofan and direct-drive turbofan engines.

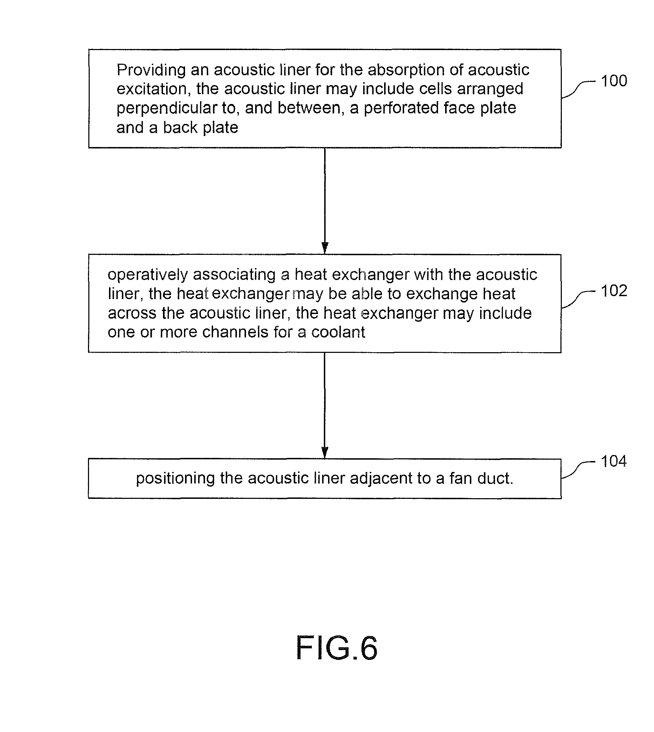

A method of absorbing acoustic excitation in a gas turbine engine can be understood by referencing the flowchart in FIG. 6. The method comprises providing an acoustic liner for the absorption of acoustic excitation, the acoustic liner may include cells arranged perpendicular to, and between, a perforated face plate and a back plate 100, operatively associating a heat exchanger with the acoustic liner, the heat exchanger may be able to exchange heat across the acoustic liner, the heat exchanger may include one or more channels for a coolant 102, and positioning the acoustic liner adjacent to a fan duct 104.

### INDUSTRIAL APPLICABILITY

Various parts of a gas turbine engine generate heat while operating, including the compressor, combustor, turbine, central rotating shaft and fan. To maintain proper operational temperatures, excess heat must be removed from the system. Conventionally, this is accomplished using oil coolant loops including air/oil or fuel/oil heat exchangers. The excess heat is then dumped into the bypass airflow for removal from the system.

Components of a gas turbine engines also produce acoustic excitations when operating, particularly the fan. As the fan rotates at a given angular speed, acoustic excitations are created. These acoustic excitations can be absorbed into sections of the gas turbine engine or expelled through the fan nozzle at the aft end of the nacelle. Absorbing these acoustic excitations is a critical design consideration as they may cause excessive external noise or vibrations in engine components not designed to absorb them. A conventional acoustic liner is often used to absorb a portion of these acoustic excitations, and can be located at various points along the fan duct.

Separate cooling and acoustic systems are generally used. However, by combining these into a single acoustic liner, the present disclosure greatly improves efficiency, cost and complexity by reducing the total number of engine components.

## Claims

1. An acoustic liner (3) for a gas turbine engine (10), comprising:
an acoustic structure (35) for the absorption of acoustic excitation; and
a heat exchanger operatively associated with the acoustic structure (35), the heat exchanger able to exchange heat across the acoustic structure (35).

2. A gas turbine engine (10) comprising:
a fan (18);
a compressor (11) downstream of the fan;
a combustor (12) downstream of the compressor (11);
a turbine (13) downstream of the combustor (12);
an acoustic structure (35) operatively associated with at least one of the fan (18), compressor (11), combustor (12) and turbine (13), and adapted for the absorption of acoustic excitation; and
a heat exchanger operatively associated with the acoustic structure (35), the heat exchanger able to exchange heat across the acoustic structure (35).

3. The acoustic liner (3) or gas turbine engine (10) of claim 1 or 2, wherein the acoustic structure (35) includes cells (39) arranged perpendicular to and between a perforated plate (38) and a back plate (40).

4. The acoustic liner (30) or gas turbine engine (10) of claim 3, wherein the cells (39) are honeycomb shaped in cross-section.

5. The acoustic liner (3) or gas turbine engine (10) of claim 3 or 4, wherein the cells (39), perforated plate (38) or back plate (40) are fabricated using an additive manufacturing method.

6. The acoustic liner (3) or gas turbine engine (10) of any preceding claim, wherein the heat exchanger includes one or more channels (42) for a coolant (45).

7. The acoustic liner (3) or gas turbine engine (10) of claim 6, wherein the channels (42) are in coolant flow communication with a coolant loop (46) in the gas turbine engine (10).

8. The acoustic liner (3) or gas turbine engine (10) of claim 6 or 7, wherein the coolant (45) is air.

9. The acoustic liner (3) or gas turbine engine (10) of any of claims 6 to 8, wherein the coolant (45) in the channels (42) flows in a direction counter to the direction of airflow through a fan duct (24) adjacent to the acoustic liner (3).

10. The acoustic liner (3) or gas turbine engine (10) of any preceding claim, wherein the acoustic liner (3) is located on an inner diameter surface of a fan duct (36).

11. The gas turbine engine (10) of any of claims 2 to 10, wherein the acoustic liner (3) is sized and arranged to correspond to the wavelength of acoustic excitation produced by the fan (18).

12. A method of absorbing acoustic excitation in a gas turbine engine (10) comprising:
providing an acoustic liner (3) for the absorption of acoustic excitation, the acoustic liner (3) including cells (39) arranged perpendicular to, and between, a perforated face plate (38) and a back plate (40):
operatively associating a heat exchanger with the acoustic liner (3), the heat exchanger able to exchange heat across the acoustic liner (3), the heat exchanger including one or more channels (42) for a coolant (45); and
positioning the acoustic liner (3) adjacent to a fan duct (24).
